# EUROPEAN PATENT APPLICATION

(11) **EP 2 244 469 A1**
(43) Date of publication of application: **27.10.2010**
(21) Application number: 10159839.9
(22) Date of filing: 14.04.2010
(51) Int. Cl.: H04N 5/44, H04N 5/66

(54) **A method for displaying a high-definition image on standard display systems having limited buffer**

(30) Priority: 22.04.2009 TR 200903154
(71) Applicant: Vestel Elektronik Sanayi ve Ticaret A.S., 45030 Manisa (TR)
(72) Inventor: ISIK, SIMGE, 45030 Manisa (TR)
(74) Representative: Cayli, Hülya

(57) **Abstract**

The present invention comprises a method which delays the real image data for a certain period of time and compensates, by means of this delay, the difference between the input active time and output real active time which is necessary for 16:9 aspect ratio conversion in order to reduce the buffer space required by the format conversion needed to display high-definition (HD) image on standard display devices.

## Description

### Technical Field

The present invention relates to a method which enables standard 4:3 display systems with limited buffer to support high-definition image. In other words, the present invention is related to a method developed for displaying a 16:9 picture format on displays with limited buffer.

### Prior Art

"HD ready" logo is related to capability of television receivers to display high-definition images. "HD ready" is used as a quality mark which differentiates display devices that are able to process and display high-definition image signals from others.

As high-definition image signals can be broadcasted today, the use of the display systems supporting these signals are becoming widespread.

HDTV broadcasts can be defined by three parameters:
- The number of lines describing vertical resolution,
- Scanning system: progressive (p) or interlaced (i),
- The number of frame or field per second.

In progressive scanning, the image frame is displayed on the screen at a time. In interlaced scanning however, odd numbered lines of the image are displayed at first, and then even numbered lines are displayed.

A 720p wide screen image includes a 16:9 frame field, a horizontal resolution of 720 pixels, a vertical resolution of 1280 pixels and a total of 0.92 million pixels. 720p60 format records 60 frames (60Hz) per second. The number 720 represents 720 vertical resolution lines and p represents progressive scanning. In the case where 60 image frames are broadcasted, 720p provides the highest possible motion resolution. 1080i50 format includes 1920x1080 pixels (2 MP) and records 50 fields per second.

Most HDTV systems also support standard resolution and flow or field ratio.

In NTSC (National Television Standards Committee) color coding system, the frame field of TV image is 4:3. However, 16:9 wide frame field is applied in HDTVs. The frame field should be converted from 4:3 to 16:9 in order to display an image with 4:3 frame field on HDTV.

Standard 4:3 television receivers must have a capacity of displaying a 16: 9 wide screen video as well. A 16:9 video program can be displayed on a 4:3 display by applying a vertical format conversion; the said format conversion converts 16:9 image such that the image fits in ¾ height of the display.

The aspect ratio (frame field) conversion which is needed to be applied for displaying a 16:9 program on a 4:3 display, may require conversion of a 1080-line image to an 810-line image for instance. A typical vertical format converter applies the following processes to perform this conversion: two line periods are waited until two image lines are received by the system, then an output line is formed using these two. The formed image line is displayed during one line period of the input signal. Then, a second output line is formed using the third input line during the next input period. Following this process, the converter will use a fourth input line to form a third output line. At this point, the converter will wait for another input line to be completely read. This wait or delay is a period that stems from the vertical format converter, which recalculates the pixels for each line, and that contains all the input lines. Hence, dead line periods where no data are sent to the display device occurs.

The above mentioned function requires a sufficient memory/buffer depth (for instance, ¼ of an image frame) along with an adequate band width in order to write the image frames within regular image frame period and to read the output image frames during ¾ of the regular image frame period.

The developments on reducing the memory and band width requirements in display systems are always needed; by this means, the systems and circuits used can be simplified and costs of manufacture can be cut down.

In the published patent application No JP5176304, a method and a system for obtaining a superimposed output video signal with 16:9 field frame from a superimposed input video signal with 4:3 field frame are disclosed. According to this embodiment, an input video signal is temporarily recorded on the buffer and then given as an output. An output image with 16:9 frame field is obtained by the aid of the switches within a predefined schedule by means of the said system in which a filter group, a selection circuit and a timer are utilized.

In the published patent application No EP1259068, a method which forms black lines as output signals during the above mentioned dead periods while video signals are applied frame field conversion.

### Object of the Invention

The aim of the present invention is to reduce the buffer space required by the format conversion which should be applied in order to display the high-definition image on standard display devices.

Another aim of the invention is to ensure that an image signal with 16:9 frame field can be displayed on display systems with limited buffers.

A further aim of the invention is to provide a frame field conversion method in order to ensure that 16:9 picture format is supported for SD (standard definition) and HD (high definition) featured input signals by display panels with limited buffers.

### Brief Description of the Drawings

Figure 1 comprises a schedule of prior art which indicates the relation between input data and output data during framelocking process.
Figure 2 comprises sample diagram which shows displaying 720p (1280 x 720) 16:9 input signal on an XGA panel.
Figure 3 shows a schedule of prior art which represents the aspect ratio conversion shown in Figure 2.
Figure 4 shows a schedule of an embodiment of the subject method of the invention which represents the aspect ratio conversion shown in Figure 2.
Figure 5 comprises a sample diagram which shows displaying an image signal in a 16:9 picture format.

### Disclosure of the Invention

720p image format is compatible with new flat panel technologies, for instance plasma and LCDs. Certain format conversion processes need to be performed in order to display 720p image format on CRT based televisions, which are usually interlaced display devices.

Image frame output rate must be equal to the input rate in order that the image signal is properly displayed. If this state is not ensured, either attempts are made to form output lines before the input lines get ready in the buffer (the buffer follows the image processor), or the input lines leave the buffer before output lines are formed (the buffer precedes the image processor). Image distortions can be observed in both cases, repeated or undisplayed parts may occur. To prevent this case, video and graphic signals should be synchronized applying framelocking process. Framelocking eliminates tearing and motion artefacts which occur in the case that video and graphic signals are not synchronized.

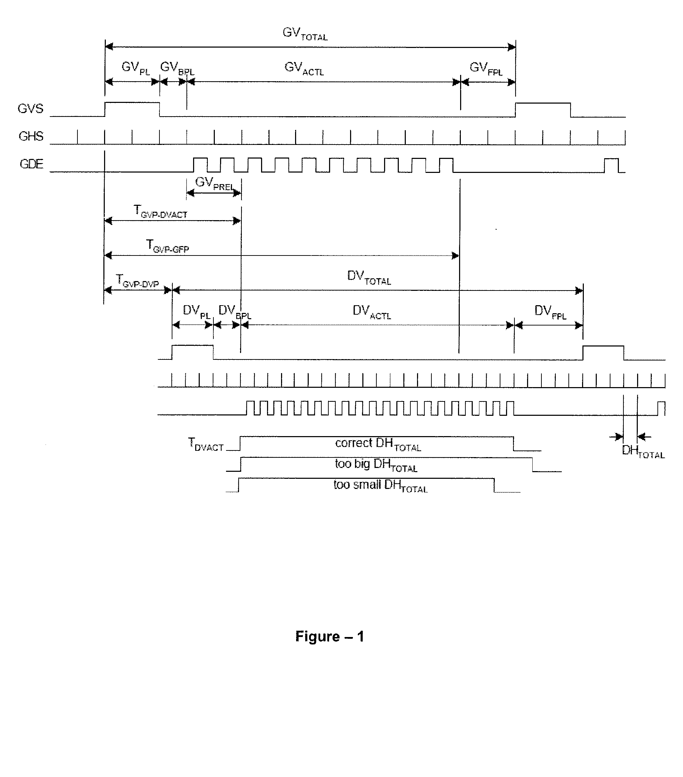

The schedule shown in Figure 1 represents the relation between the input data and output data during framelocking.

For instance, a 720p (1280 x 720) image signal should be converted to a different format in order to be displayed on an XGA (1024 x 768) panel. If the an original 16:9 aspect ratio is desired, the signal will be vertically shrunk such that the signal fits into the display and a 1024 x 576 output signal will be generated.

It is necessary to examine the difference in 'active time' between the input signal and desired output format in order to examine whether or not a certain aspect ratio is possible. Active time is the length of time for which the signal contains valid image data. This difference in 'active time' can be expressed in terms of input image signal lines and must not exceed the size of the image processor's buffer depth for the aspect ratio conversion to be possible. If the number of lines exceeds the size of the buffer, then a buffer overflow will occur.

The capture side of the image processor, which captures the input image signal, transmits the captured input signal to the buffer. The display side of the image processor, which processes the captured image, reads the incoming image signal from the buffer. These two processes are realized simultaneously. The image processing part does not begin reading the signal before the input signal is ready. Thus, to read the buffer, the image processing part waits until a certain number (amount) of lines, which are calculated by the software, have occurred; hence, begins reading process with some delay. However, the said delay time is limited by the buffer depth; and in most standard display systems the said buffer depth is below the active time difference required for 16:9 aspect ratio conversion.

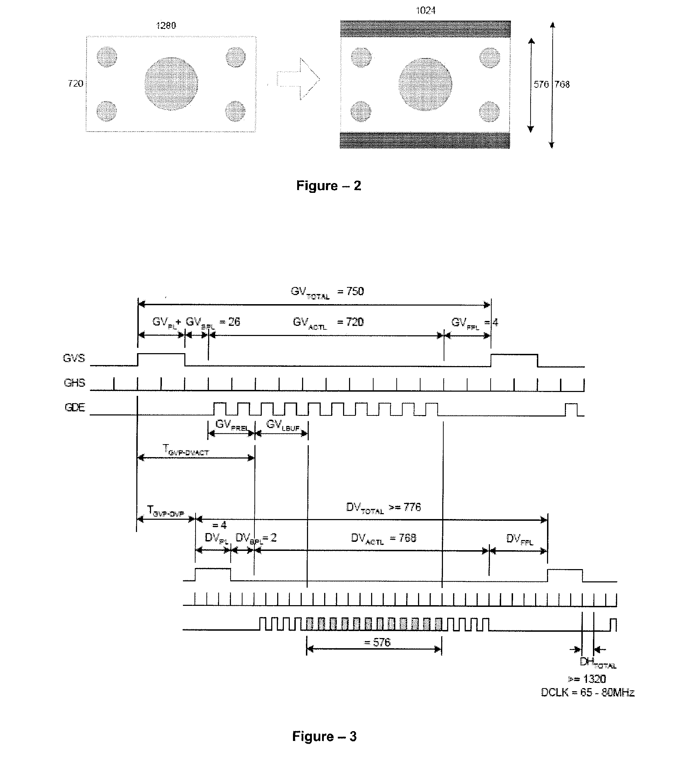

In Figure 2, a 720p (1280 x 720) 16:9 input signal displayed on an XGA panel is seen. High-definition (HD) images must meet the aspect ratio shown in Figure 2.

The schedule for this example is shown in Figure 3. The input mode for this example is 720p and has the following time parameters:
Vertical frequency: 60 Hz
GV_{TOTAL}: 750 lines (GV_{TOTAL}: Input signal, the number of the total vertical lines)
GVACTL: 720 lines (GVACTL: Input signal, the number of active vertical lines)
GVPL + GVBPL: 26 lines (GVPL: pulse width of the vertical synchronization input signal;
GVBPL: back porch of the vertical synchronization input signal)
GVFPL: 4 lines (GVFPL: front porch of the vertical synchronization input signal)
XGA panel includes the timing constraints below:
DV_{TOTAL} >= 776 lines (DV_{TOTAL}: display, total number of vertical lines)
DV_{ACTL} = 768 lines (DV_{ACTL}: display, the number of active vertical lines)
DVPL = 4 lines (DVPL: display, pulse width of the vertical synchronization signal)
DVBPL: 2 lines (DVBPL: display, back porch of the vertical synchronization signal)
DH_{TOTAL} >= 1320 pixels (DH_{TOTAL}: display, total horizontal number of pixels per line)
DCLK = 65 to 80 MHz (80MHz will be used for this example) (DCLK: display clock)

The following steps are used in order to calculate the buffer depth necessary to perform this aspect ratio conversion.
**Step 1 - Calculate maximum possible DH_{TOTAL}**
   - Since the output side "real active" lines are smaller than normal, making the lines as long as possible will minimize buffering requirements.
   - Since Vertical Input Frequency = 60 Hz and DV_{TOTAL} min = 776, DHTOTAL max = 80MHz / (60Hz * 776) = 1718 pixels/line
**Step 2 - Determine output "real active" time**
   - Since desired output vertical active lines are 576, then the output "real active" time is:
      576 lines * 1718 pixels/line * 1/80MHz = 12.37 mS
**Step 3 - Determine Input active time**
   - The input active time is:
      1/60 Hz * 720/750 = 16.00 mS
Step 4 - Determine the difference between input active time and output "real active time"
   16.00 mS - 12.37 mS = 3.63 mS
**Step 5 - Convert this time difference into input lines - GV_{LBUF}**
   GV_{LBUF} = 3.63 mS * 750/16.67 mS = 163.3 input lines (round up) = 164

Since most of the framelocked systems have limited display buffer, which is less than 100 lines, this conversion can not be done in a framelocked system.

As mentioned above, 4:3 panels with limited buffers of the prior art cannot display high-definition images and cannot support 16:9 picture modes for SD and HD inputs due to limited buffer depth.

Output vertical active time starts at the top of the screen but real output data is displayed in this example after 100 lines. So the system waits at blank period and needs buffer for this state, but there is no need to wait for the said period.

The present invention resolves this problem of the prior art with a novel image processing method. The real image data is delayed for a certain time in accordance with the said method, this delay therefore compensates the difference between the input active time and output real active time for 16:9 aspect ratio conversion. The said process is performed in the register of the image processor. According to the method of the invention, the image signal is captured at the capture side of the processor and written on the buffer, the desired aspect ratio conversion is done, and the desired output signal is obtained and displayed on the display. The method of the invention prevents lagging of the image-processing part while displaying the output format, i.e. it prevents that the input lines do not leave the buffer before the output lines are formed.

It is ensured that the input signal is read earlier by changing the register settings of the image processor in accordance with the method of the invention. Thus, the real input data is delayed in the image-processing part and this delay saves time for the system and ensures that 16:9 format, unsupported in systems with limited buffer depth, is supported.

As mentioned above, a 720p (1280x720) signal will need to be converted to a different format to be displayed on the XGA (1024x768) panel. If the original aspect ratio of 16:9 is to be maintained then the signal will be shrunk vertically to accommodate the screen, resulting in an output signal of 1024x576.

In this case, the buffer depth required for the above mentioned aspect ratio conversion can be calculated.
**Step 1: Calculate Maximum possible DH_{TOTAL}:**
   Vtotal = 776-100 = 676 and Vertical input frequency = 60 Hz
   DHTotalMax = 80MHz / (60Hz * 676) = 1972 pixels/line
**Step 2: Determine output "real active" time**
   Since desired output vertical active lines are 576, then the output "real active" time is: 576 line * 1972 pixels/line * 1/80MHz = 14.20 mS
**Step 3: Determine input active time**
   1/60Hz * 720/750 = 16.00 mS
**Step 4: Determine the difference between input active time and output "real active" time**
   16.00mS - 14.20mS = 1.80 mS
**Step 5: Convert this time difference into input lines - GV_{LBUF}**
   GV_{LBUF} = 1.80mS * 750 / 16.67mS = 81 input lines
   The previous calculation result for GV_{LBUF}= 164 input lines.
   164 - 81 = 83 lines that need to be buffered are saved.

**According to HDReady Logo requirements:** 720p input must be displayed in 16:9 picture format and minimum 720 vertical lines. The 16:9 ratio can be in the range of +/-5%, means 16/9=1,78 and the ratio can be 1,6889.

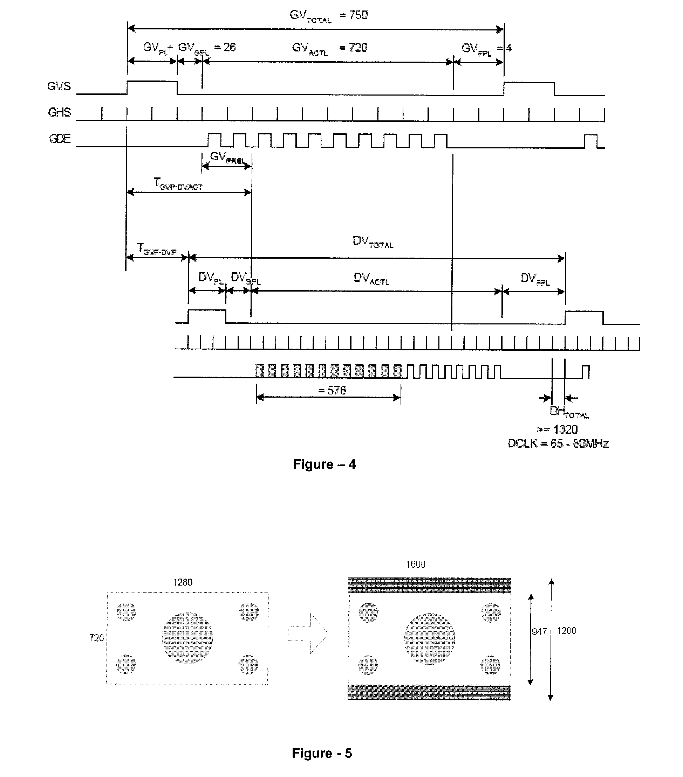

Now it is possible to calculate the buffer depth necessary for performing the aspect ratio conversion shown in Figure 5 for the condition where the method of the invention is applied.
**Step 1: Calculate Maximum possible DH_{TOTAL}:**
   Vtotal = 1206 - ((1206 - 947) / 2) = 1076.5 = 1077 lines
   Vertical input frequency = 60 Hz
   DHTotalMax = DisplayClock(MHz) / (60Hz * 1077) pixels/line
**Step 2: Determine output "real active" time**
   Since desired output vertical active lines are 576, then the output "real active" time is: 947 line * DisplayClock(MHz) / (60Hz * 1077) pixels/line * 1/ DisplayClock(MHz) = 14.655 mS
**Step 3: Determine input active time**
   1/60 Hz * 720/750 = 16.00 mS
**Step 4: Determine the difference between input active time and output "real active" time**
   16.00 mS - 14.655 mS = 1.345 mS
**Step 5: Convert this time difference into input lines - GV_{LBUF}**
   GV_{LBUF} = 1.345mS * 750 / 16.67 mS = 60.51= 61 input lines is enough to perform this conversion.

The said method can be used in all television and monitor applications.

## Claims

1. A method developed for reducing the buffer space required by the format conversion necessary for displaying high-definition (HD) image with a 16:9 aspect ratio in standard display devices wherein the method comprises the following steps
• The capture side of an image processor which captures input image signal writes the captured image on the buffer,
• The image-processing part of the said image processor reads the image signal from the said buffer,
• The image processor performs the necessary aspect ratio conversion,
• The output signal in desired format is displayed on the display,
and the said system is **characterized that** it comprises the step of delaying the real image data in the image-processing part for a certain period of time in order to prevent lagging of the image-processing part and to compensate the difference between input active time and output real active time for aspect ratio conversion.

2. A method according to Claim 1 wherein the delaying of the real image data in the image-processing part for a certain period of time is realized by reading the input image signal earlier.

3. A method according to Claim 1 wherein the input signal is read earlier by changing the register settings of the image processor.
